# EUROPEAN PATENT SPECIFICATION

(11) **EP 3 988 518 B1**
(45) Date of publication and mention of the grant of the patent: **15.03.2023**
(21) Application number: 19945876.1
(22) Date of filing: 16.10.2019
(51) Int. Cl.: C04B 35/565, C04B 35/64, C04B 35/66, C04B 35/573, C04B 35/63

(54) **SINTERING METHOD FOR IMPROVING ANTIOXIDANT PERFORMANCE OF NITRIDE BONDED SILICON CARBIDE MATERIAL**
SINTERVERFAHREN ZUR VERBESSERUNG DER ANTIOXIDATIVEN LEISTUNG VON NITRIDGEBUNDENEN SILIZIUMKARBIDMATERIAL
PROCÉDÉ DE FRITTAGE POUR AMÉLIORER LES PERFORMANCES ANTIOXYDANTES D'UN MATÉRIAU DE CARBURE DE SILICIUM LIEÉ AU NITRURE

(30) Priority: 20.09.2019 CN 201910891154
(43) Date of publication of application: 27.04.2022
(73) Proprietor: Sinosteel Luoyang Institute of Refractories Research Co., Ltd, Luoyang, Henan 471039 (CN)
(72) Inventor: WANG, Jiaping, Luoyang, Henan 471039 (CN); HUANG, Zhigang, Luoyang, Henan 471039 (CN); WANG, Wenwu, Luoyang, Henan 471039 (CN); LI, Jie, Luoyang, Henan 471039 (CN); WU, Jiguang, Luoyang, Henan 471039 (CN)
(74) Representative: Murgitroyd & Company
(86) International application number: PCT/CN2019/111453
(87) International publication number: WO 2021/051465

(56) References cited:
- CN-A- 101 555 161
- ZHANG ET AL: "Surface Oxidation Treatment for Si3N4-Bonded SiC Refractory", JOURNAL OF NORTHEAST UNIVERSITY OF TECHNOLOGY, vol. 13, no. 2, 30 April 1992 (1992-04-30) , pages 182-186, XP055792393,
- Wang G X ET AL: "Oxidation mechanism of Si 3 N 4 -bonded SiC ceramics by CO, CO 2 and steam", J Mat Sci, 1 March 1998 (1998-03-01), pages 1309-1317, XP055929427, Retrieved from the Internet: URL:https://link.springer.com/article/10.1 023/A:1004354415867 [retrieved on 2022-06-09]
- GAO W ET AL: "Oxidation of nitride bonded silicon carbide in wet air atmosphere", BRITISH CERAMIC TRANSACTIONS, INSTITUTE OF MATERIALS, LONDON, GB , vol. 101, no. 6 30 November 2002 (2002-11-30), pages 231-236, XP009536434, ISSN: 0967-9782, DOI: 10.1179/096797802225004027 Retrieved from the Internet: URL:http://www.tandfonline.com/doi/full/10 .1179/096797802225004027 [retrieved on 2013-11-29]
- FOX DENNIS S. ET AL: "Paralinear Oxidation of Silicon Nitride in a Water-Vapor/Oxygen Environment", JOURNAL OF THE AMERICAN CERAMIC SOCIETY, vol. 86, no. 8, 1 August 2003 (2003-08-01) , pages 1256-1261, XP055792390, US ISSN: 0002-7820, DOI: 10.1111/j.1151-2916.2003.tb03461.x
- Zhang, Guangrong, Han Huayun;Zhang Weimin;Wang Tongchun: "Surface Oxidation Treatment for Si3N4-Bonded SiC Refractory", Journal of Northeast University of Technology, vol. 13, no. 2, 30 April 1992 (1992-04-30) , pages 182-186, XP055792393,
- Fox Dennis S., Opila Elizabeth J., Nguyen Quynhgiao N., Humphrey Donald L., Lewton Susan M.: "Paralinear Oxidation of Silicon Nitride in a Water-Vapor/Oxygen Environment", Journal of the American Ceramic Society, BLACKWELL PUBLISHING, MALDEN, MA., US, vol. 86, no. 8, 1 August 2003 (2003-08-01) , pages 1256-1261, XP055792390, US ISSN: 0002-7820, DOI: 10.1111/j.1151-2916.2003.tb03461.x

## Description

### FIELD OF THE INVENTION

The invention relates to a sintering method for improving the oxidation resistance of a nitride bonded silicon carbide material, in particular to a sintering method of high oxidation resistant nitride bonded silicon carbide material in which the nitriding and protective oxidation are continuously completed in one step via controlled atmosphere.

### DESCRIPTION OF THE RELATED ART

Nitride-bonded silicon carbide materials have excellent properties such as high thermal conductivity, low linear expansion coefficient, high strength at room temperature and high temperature, good thermal shock resistance, good chemical corrosion resistance and high temperature wear resistance. It is widely used in the fields of steel, non-ferrous metallurgy, chemistry, electric power, ceramics and waste-to-energy.

Nitride-bonded silicon carbide materials are non-oxide refractory materials and are easy to be oxidized. Therefore, the sintering process of the above materials must be performed under a non-oxidizing atmosphere. At present, the nitriding method of reaction sintering in which metal silicon and silicon carbide are used as raw materials is commonly used in the refractory industry. However, the nitride-bonded silicon carbide materials produced simply by the nitriding method of reaction sintering are always damaged by oxidation during the application at high-temperature. Especially in the working environment with high water vapor content, the oxidative destruction is more obvious and quicker. Therefore, it is urgent for the industry to improve the oxidation resistance of nitride bonded silicon carbide materials, especially under the high temperature and water vapor atmosphere. US patent US8003557B2 has reported a method of boride addition to improve the high temperature water vapor oxidation resistance of nitride/oxy-nitride bonded silicon carbide materials, in which the sintering atmosphere is a nitrogen atmosphere or a mixed atmosphere of oxygen and nitrogen.

However, the method used to improve the oxidation resistance of the nitride-bonded silicon carbide material, in which the "wet oxygen-dry oxygen" atmosphere (wet oxygen is a mixed gas of oxygen and water vapor) is used after the sintering of nitride-bonded silicon carbide materials, was few reported. To make it easier for the readers to understand the above method, the mechanism and feasibility of the method are briefly analyzed below. The oxidative destruction of nitride bonded silicon carbide materials during the application is mainly due to the following reactions of Si₃N₄, Si₂N₂O, and SiC respectively with O₂, H₂O (g):

Si₃N₄ (s) + 3O₂ (g) = 3SiO₂ (s) + 2N₂ (g)

Si₂N₂O (s) +1.5O₂ (g) = 2SiO₂ (s) + N₂ (g)

SiC (s) + 2O₂ (g) = SiO₂ (s) + CO₂ (g)

Si₃N₄ (s) + 6H₂O (g) = 3SiO₂ (s) + 6H₂ (g) + 2N₂ (g)

Si₂N₂O(s) + 3H₂O (g) = 2SiO₂ (s) + 3H₂ (g) + N₂ (g)

SiC(s) + 3H₂O (g) = SiO₂ (s) + CO (g)+3H₂ (g)

It can be seen from the above reactions that SiO₂ is a stable phase in an environment with high oxygen and high water vapor content. The main reason why the oxidation product SiO₂ fails to protect the material during high-temperature application is that the generated SiO₂ is not continuous, and during high-temperature application, sometimes it will peel off continuously due to the erosion and other reasons.

ZHANG ET AL: "Surface Oxidation Treatment for Si3N4-Bonded SiC Refractory",JOURNAL OF NORTHEAST UNIVERSITY OF TECHNOLOGY, vol. 13, no. 2, 30 April 1992 (1992-04-30), pages 182-186, discloses a method for the surface oxidation treatment of an silicon nitride-bonded SiC refractory material, which comprises nitriding, sintering, and placing a sample in a muffle furnace at a temperature of 1200°C under an air atmosphere for a certain amount of time.

Wang G X ET AL: "Oxidation mechanism of Si3N4-bonded SiC ceramics by CO, CO2 and steam",J Mat Sci, 1 March 1998 (1998-03-01), pages 1309-1317, discloses a method for the oxidation treatment of an silicon nitride-bonded SiC material, which comprises treating the ceramic with steam at 1073-1573 K for 12 hours.

GAO W ET AL: "Oxidation of nitride bonded silicon carbide in wet air atmosphere", BRITISH CERAMIC TRANSACTIONS, INSTITUTE OF MATERIALS, LONDON, GB,vol. 101, no. 6 30 November 2002 (2002-11-30), pages 231-236, discloses a method for the oxidation treatment of an silicon nitride-bonded SiC material, which comprises heating the ceramic in air and in wet air at 1000°C and 1200°C.

### SUMMARY OF THE INVENTION

### Technical problem

If the nitride bonded silicon carbide material is covered with a continuous layer of SiO₂ oxide film having a suitable thickness on the surface of the material before the application, the oxidative destruction of the nitride bonded silicon carbide material by oxygen and water vapor during high-temperature application can be effectively prevented. But the problem is how to generate a continuous SiO₂ oxide film layer having a suitable thickness on the surface of the nitride bonded silicon carbide material. In the integrated circuit semiconductor industry, the masking effect of silicon dioxide is used to achieve the insulation of the components. The silicon wafer is thermally oxidized in the process, that is, a layer of silicon dioxide with a dense structure and a suitable thickness is formed on the surface of the silicon wafer. In order to balance efficiency and quality, the combined oxidation process of "dry oxygen-wet oxygen-dry oxygen" is usually adopted. The oxidation principle of Si₃N₄, Si₂N₂O or SiC is the same as that of Si.

### Solution for the problem

The purpose of the present invention is to propose a sintering method for improving the oxidation resistance of nitride-bonded silicon carbide materials. In the sintering method, the oxidation resistance of nitride-bonded silicon carbide materials can be improved by controlling the atmosphere, namely by using a "wet oxygen-dry oxygen" combination method. Moreover, in this method the nitride bonded silicon carbide material can be directly protectively oxidized after nitriding and sintering, without repetitive heat-up from room temperature.

The present invention provides a sintering method for improving the oxidation resistance of nitride-bonded silicon carbide material, the sintering method comprises: introducing pure O₂ or mixed gas containing pure O₂ and H₂O into a furnace with nitride bonded silicon carbide materials inside it after nitriding and sintering the nitride bonded silicon carbide materials, in order to carry out protective oxidation through "wet oxygen-dry oxygen" process, using a flowmeter to control the flow rate of pure O₂ or mixed gas and the ratio of the mixed gas, and observing the height difference of the water column in the U-shaped tube to ensure that the furnace is under a positive pressure, the specific sintering process comprises following steps: after nitriding and sintering the nitride bonded silicon carbide materials, introducing mixed gas containing pure O₂ and H₂O at temperature of 1100°C~ 1400°C, and keeping the temperature for 1-15 hours to carry out "wet oxygen" protective oxidation, then introducing pure O₂, and keeping the temperature for 1-10 hours to carry out "dry oxygen" protective oxidation, wherein the pure O₂ is dry oxygen gas with oxygen content ≥ 99%, the mixed gas contains 2∼98% by volume of pure O₂ and 98∼2% by volume of H₂O (in gas), the pressure range of the positive pressure is 10∼30 mm water column.

The sintering method for improving the oxidation resistance of nitride-bonded silicon carbide materials of the present invention, wherein the pressure range of the positive pressure is 15-25 mm water column; the mixed gas contains 5-95% by volume of pure O₂ (O₂ content ≥ 99%) and 95∼5% by volume of H₂O (in gas).

### Beneficial effect

The sintering method for improving the oxidation resistance of nitride-bonded silicon carbide material of the present invention has following advantages: the process is simple and easy to control, and the protective oxidation of nitride-bonded silicon carbide material can be achieved directly after nitriding, meaning the sintering of materials is completed in one step, which is more energy efficient and suitable for industrial production.

### BRIEF DESCRIPTION OF THE DRAWING

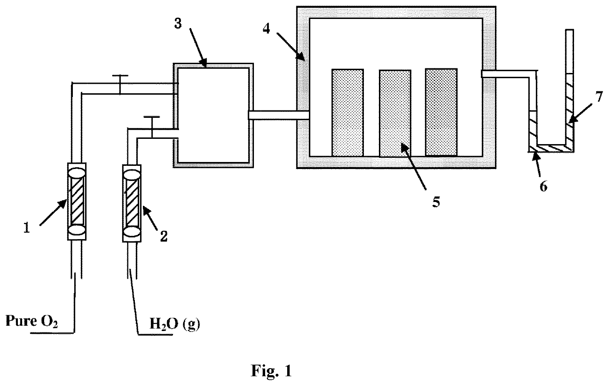

Fig.1 is a schematic diagram of the sintering equipment for nitride bonded silicon carbide materials with high oxidation resistance of the present invention.

In the figure: 1: air flowmeter, 2: water vapor flowmeter, 3: gas mixing device, 4: furnace, 5: nitride bonded silicon carbide material, 6: U-shaped tube, 7: water column.

### DESCRIPTION OF THE PREFERRED EMBODIMENT

The sintering method according to the present invention will be described in detail in the following embodiments with reference to FIG.1. The nitride bonded silicon carbide material of the present invention is not limited to the materials mentioned in the embodiment. All the materials, which contain nitride or oxy-nitride or nitride/oxy-nitride as the binding phase, and silicon carbide ≥ 50*%* (calculated by weight), belong to the nitride bonded silicon carbide material of the present invention, and fall into the protection scope of the present invention.

### Example 1

The raw materials selected for the nitride bonded silicon carbide material and the raw material composition (in percentage by weight) are: 75% of SiC particles, 10% of SiC fine powder, and 15% of Si powder. The raw materials were compression molded and loaded into a furnace, and nitrided at 1300°C. When the nitriding finished and the temperature in the furnace was lowered to 1100°C, mixed gas containing 2% pure O₂ and 98% H₂O (in gas) was introduced into the furnace through the flowmeter control, the pressure in the furnace was kept at 10mm water column which was ensured by observing the height difference of the water column in the U-shaped tube. Under these conditions, "wet oxygen" protective oxidation was carried out at 1100°C for 15 hours. Then pure O₂ was introduced into the furnace, the pressure in the furnace was kept at 10mm water column which was ensured by observing the height difference of the water column in the U-shaped tube. Under these conditions, "dry oxygen" protective oxidation was carried out at 1100°C for 10 hours. In comparative example 1, the same sample was nitrided and sintered at 1300°C without protective oxidation treatment process. The nitriding process of comparative example 1 was the same as that of Example 1.

Respectively from the sintered materials of example 1 and comparative example 1, three samples with a size of 165×114×22 mm were cut, and tested in terms of volume and mass, and then put into the test furnace. Following ASTM-C863 standard, the temperature was raised to 1000°C, steam was introduced at a rate of 32kg/(m³·h), and the temperature was kept for 500 hours. After the furnace was shut down and cooled down, the samples were taken out for the tests of volume and mass after oxidation, the volume change rates and mass change rates were calculated, and the average value was taken. The volume change rate of the sample after the test was used as the criteria for judging the material's oxidation resistance. The smaller the volume change rate is, the better the oxidation resistance is. The weight change rate of the sample after the test was taken only as a reference index. The results were shown in Table 1.

**Table 1**

| | volume change rate (%) | weight change rate (%) |
|---|---|---|
| Example 1 | 0.97 | 2.05 |
| Comparative Example 1 | 3.65 | 3.08 |

### Example 2

The raw materials selected for the nitride bonded silicon carbide material and the raw material composition (in percentage by weight) are: 70% of SiC particles, 11.5% of SiC fine powder, 16% of Si powder, and 2.5% of SiO₂ fine powder. The raw materials were compression molded and loaded into an electric furnace, and were nitride and sintered at 1350°C. When the nitriding finished and the temperature in the furnace was lowered to 1100°C, mixed gas containing 60% pure O₂ and 40% H₂O (in gas) was introduced into the furnace through the flowmeter control, the pressure in the furnace was kept at 25mm water column which was ensured by observing the height difference of the water column in the U-shaped tube. Under these conditions, "wet oxygen" protective oxidation was carried out at 1100°C for 8 hours. Then the mixed gas was stopped and the temperature in the furnace was increased to 1300°C, pure O₂ was introduced into the furnace, the pressure in the furnace was kept at 10 mm water column which was ensured by observing the height difference of the water column in the U-shaped tube. Under these conditions, "dry oxygen" protective oxidation was carried out at 1300°C for 6 hours. In Comparative Example 2, the same sample was nitrided and sintered at 1350°C without protective oxidation treatment process. The nitriding process of comparative example 2 was the same as that of example 2.

Respectively from the fired materials of Example 2 and comparative example 2, three samples with a size of 165×114×22 mm were cut, and tested in terms of volume and mass, and then put into the test furnace. Following ASTM-C863 standard, the temperature was raised to 1000°C, steam was introduced at a rate of 32kg/(m³·h), and the temperature was kept for 500 hours. After the furnace was shut down and cooled down, the samples were taken out for the tests of volume and mass after oxidation, the volume change rates and mass change rates were calculated, and the average value was taken. The volume change rate of the sample after the test was used as the criteria for judging the material's oxidation resistance. The smaller the volume change rate is, the better the oxidation resistance is. The weight change rate of the sample after the test was taken only as a reference index. The results were shown in Table 2.

**Table 2**

| | volume change rate (%) | weight change rate (%) |
|---|---|---|
| Example 2 | 0.89 | 2.03 |
| Comparative Example 2 | 2.75 | 3.01 |

### Example 3

The raw materials selected for the nitride bonded silicon carbide material and the raw material composition (in percentage by weight) are: 70% of SiC particles, 22% of SiC fine powder, 6% of Si powder, and 2% of SiO₂ fine powder. The raw materials were compression molded and loaded into an electric furnace, and were nitride and sintered at 1420°C. When the nitriding finished and the temperature in the furnace was lowered to 1400°C, mixed gas containing 70% pure O₂ and 30% H₂O (in gas) was introduced into the furnace through the flowmeter control, the pressure in the furnace was kept at 15mm water column which was ensured by observing the height difference of the water column in the U-shaped tube. Under these conditions, "wet oxygen" protective oxidation was carried out at 1400°C for 1 hours. Then pure O₂ was introduced into the furnace, the pressure in the furnace was kept at 15mm water column which was ensured by observing the height difference of the water column in the U-shaped tube. Under these conditions, "dry oxygen" protective oxidation was carried out at 1400°C for 1 hour. In Comparative Example 3, the same sample was nitrided and sintered at 1420°C without protective oxidation treatment process. The nitriding process of comparative example 3 was the same as that of Example 3.

Respectively from the fired materials of Example 3 and comparative example 3, three samples with a size of 165×114×22 mm were cut, and tested in terms of volume and mass, and then put into the test furnace. Following ASTM-C863 standard, the temperature was raised to 1000°C, steam was introduced at a rate of 32kg/(m³·h), and the temperature was kept for 500 hours. After the furnace was shut down and cooled down, the samples were taken out for the tests of volume and mass after oxidation, the volume change rates and mass change rates were calculated, and the average value was taken. The volume change rate of the sample after the test was used as the criteria for judging the material's oxidation resistance. The smaller the volume change rate is, the better the oxidation resistance is. The weight change rate of the sample after the test was taken only as a reference index. The results were shown in Table 3.

**Table 3**

| | volume change rate (%) | weight change rate (%) |
|---|---|---|
| Example 3 | 0.63 | 1.92 |
| Comparative Example 3 | 2.52 | 2.99 |

### Example 4

The raw materials selected for the nitride bonded silicon carbide material and the raw material composition (in percentage by weight) are: 65% of SiC particles, 10% of SiC fine powder, 20% of Si powder, and 5% of SiO₂ fine powder. The raw materials were compression molded and loaded into an electric furnace, and were nitride and sintered at 1350°C. When the nitriding finished and the temperature in the furnace was lowered to 1200°C, mixed gas containing 98% pure O₂ and 2% H₂O (in gas) was introduced into the furnace through the flowmeter control, the pressure in the furnace was kept at 30mm water column which was ensured by observing the height difference of the water column in the U-shaped tube. Under these conditions, "wet oxygen" protective oxidation was carried out at 1200°C for 10 hours. Then pure O₂ was introduced into the furnace, the pressure in the furnace was kept at 30mm water column which was ensured by observing the height difference of the water column in the U-shaped tube. Under these conditions, "dry oxygen" protective oxidation was carried out at 1200°C for 6 hours. In comparative example 4, the same sample was nitrided and sintered at 1350°C without protective oxidation treatment process. The nitriding process of comparative example 4 was the same as that of example 4.

Respectively from the fired materials of example 4 and comparative example 4, three samples with a size of 165×114×22 mm were cut, and tested in terms of volume and mass, and then put into the test furnace. Following ASTM-C863 standard, the temperature was raised to 1000°C, steam was introduced at a rate of 32kg/(m³·h), and the temperature was kept for 500 hours. After the furnace was shut down and cooled down, the samples were taken out for the tests of volume and mass after oxidation, the volume change rates and mass change rates were calculated, and the average value was taken. The volume change rate of the sample after the test was used as the criteria for judging the material's oxidation resistance. The smaller the volume change rate is, the better the oxidation resistance is. The weight change rate of the sample after the test was taken only as a reference index. The results were shown in Table 4.

**Table 4**

| | volume change rate (%) | weight change rate (%) |
|---|---|---|
| Example 4 | 0.98 | 2.54 |
| Comparative Example 4 | 2.92 | 3.79 |

### Example 5

The selected raw materials and raw material composition (in percentage by weight) of the nitride bonded silicon carbide material are: 60% of SiC particles, 20% of SiC fine powder, 15% of Si powder, and 5% of SiO₂ fine powder. The raw materials were compression molded and loaded into an electric furnace, and were nitride and sintered at 1380°C. When the nitriding finished and the temperature in the furnace was lowered to 1300°C, mixed gas containing 50% pure O₂ and 50% H₂O (in gas) was introduced into the furnace through the flowmeter control, and the pressure in the furnace was kept at 25 mm water column which was ensured by observing the height difference of the water column in the U-shaped tube. Under these conditions, "wet oxygen" protective oxidation was carried out at 1300°C for 6 hours. Then pure O₂ was introduced into the furnace, the pressure in the furnace was kept at 20 mm water column which was ensured by observing the height difference of the water column in the U-shaped tube. Under these conditions, "dry oxygen" protective oxidation was carried out at 1300°C for 8 hours. In Comparative Example 5, the same sample was nitrided and sintered at 1380°C without protective oxidation treatment process. The nitriding process of comparative example 5 was the same as that of example 5.

Respectively from the fired materials of example 5 and comparative example 5, three samples with a size of 165×114×22 mm were cut, and tested in terms of volume and mass, and then put into the test furnace. Following ASTM-C863 standard, the temperature was raised to 1000°C, steam was introduced at a rate of 32 kg/(m³·h), and the temperature was kept for 500 hours. After the furnace was shut down and cooled down, the samples were taken out for the tests of volume and mass after oxidation, the volume change rates and mass change rates were calculated, and the average value was taken. The volume change rate of the sample after the test was used as the criteria for judging the material's oxidation resistance. The smaller the volume change rate is, the better the oxidation resistance is. The weight change rate of the sample after the test was taken only as a reference index. The results were shown in Table 5.

**Table 5**

| | Volume change rate (%) | weight change rate (%) |
|---|---|---|
| Example 5 | 0.86 | 2.18 |
| Comparative Example 5 | 2.47 | 3.02 |

It can be seen from the test results of the above 5 examples that the oxidation resistance will be significantly improved if silicon carbide material is processed via the sintering method provided by the present invention.

## Claims

1. A sintering method for improving the oxidation resistance of nitride-bonded silicon carbide material is **characterized in that**:
introducing pure O₂ or mixed gas containing pure O₂ and H₂O into a furnace with nitride bonded silicon carbide materials inside it after nitriding and sintering the nitride bonded silicon carbide materials, in order to carry out protective oxidation through "wet oxygen-dry oxygen" process, using a flowmeter to control the flow rate of pure O₂ or mixed gas and the ratio of the mixed gas, and at the same time, observing the height difference of the water column in the U-shaped tube to ensure that the furnace is under a positive pressure, wherein the sintering method comprising following steps:
after nitriding and sintering the nitride bonded silicon carbide materials, introducing mixed gas containing pure O₂ and H₂O at temperature of 1100°C~1400°C, and keeping the temperature for 1-15 hours to carry out "wet oxygen" protective oxidation, then introducing pure O₂, and keeping the temperature for 1-10 hours to carry out "dry oxygen" protective oxidation, wherein the pure O₂ is dry oxygen gas with oxygen content ≥ 99%, the mixed gas contains 2-98% by volume of pure O₂ and 98-2% by volume of H₂O (in gas), the pressure range of the positive pressure is 10∼30 mm water column.

2. The sintering method for improving the oxidation resistance of nitride-bonded silicon carbide materials according to claim 1, wherein the nitride-bonded silicon carbide material includes all materials with nitrides or oxy-nitrides or nitrides/oxy-nitrides as binding phase, and with a silicon carbide content more than or equal to 50% (by weight).

3. The sintering method for improving the oxidation resistance of nitride bonded silicon carbide materials according to claim 1, wherein the pressure range of the positive pressure is 15-25 mm water column.

4. The sintering method for improving the oxidation resistance of nitride bonded silicon carbide materials according to claim 1, wherein the mixed gas contains 5-95% by volume of pure O₂ (O₂ content ≥ 99%) and 95~5% by volume of H₂O (in gas).

## Patentansprüche

1. Ein Sinterverfahren zum Verbessern der Oxidationsbeständigkeit von nitridgebundenem Siliciumcarbidmaterial ist durch Folgendes gekennzeichnet:
Einleiten von reinem O₂ oder gemischtem Gas, das reines O₂ und H₂O enthält, in einen Ofen mit nitridgebundenen Siliciumcarbidmaterialien darin nach dem Nitrieren und Sintern der nitridgebundenen Siliciumcarbidmaterialien, um eine schützende Oxidation durch einen "Nasssauerstoff-Trockensauerstoff"-Prozess vorzunehmen, Verwenden eines Durchflussmessers, um die Durchflussrate von reinem O₂ oder gemischtem Gas und das Verhältnis des gemischten Gases zu steuern, und gleichzeitig Überwachen des Höhenunterschieds der Wassersäule in der U-förmigen Röhre, um sicherzustellen, dass der Ofen unter Überdruck steht, wobei das Sinterverfahren die folgenden Schritte beinhaltet:
nach dem Nitrieren und Sintern des nitritgebundenen Siliciumcarbidmaterials, Einleiten von gemischtem Gas, das reines O₂ und H₂O enthält, bei einer Temperatur von 1100 °C_{∼}1400 °C und Halten der Temperatur für 1-15 Stunden, um schützende "Nasssauerstoff"-Oxidation vorzunehmen, dann Einleiten von reinem O₂ und Halten der Temperatur für 1-10 Stunden, um schützende "Trockensauerstoff"-Oxidation vorzunehmen, wobei das reine O₂ Trockensauerstoffgas mit einem Sauerstoffgehalt von ≥ 99 % ist, das gemischte Gas zu 2-98 Vol.-% reines O₂ und zu 98-2 Vol.-% H₂O (in Gasform) enthält, der Druckbereich des Überdrucks 10-30 mm der Wassersäule beträgt.

2. Sinterverfahren zum Verbessern der Oxidationsbeständigkeit der nitritgebundenen Siliciumcarbidmaterialien gemäß Anspruch 1, wobei das nitritgebundene Siliciumcarbidmaterial alle Materialien mit Nitriden oder Oxynitriden oder Nitriden/Oxynitriden als bindende Phase und mit einem Siliciumcarbidgehalt von mehr als oder gleich 50 Gew.-% umfasst.

3. Sinterverfahren zum Verbessern der Oxidationsbeständigkeit von nitritgebundenen Siliciumcarbidmaterialien gemäß Anspruch 1, wobei der Druckbereich des positiven Drucks 15-25 mm der Wassersäule beträgt.

4. Sinterverfahren zum Verbessern der Oxidationsbeständigkeit von nitritgebundenen Siliciumcarbidmaterialien gemäß Anspruch 1, wobei das gemischte Gas zu 5-95 Vol.-% reines O₂ (O₂-Gehalt ≥ 99 %) und zu 95-5 Vol.-% H₂O (in Gasform) enthält.

## Revendications

1. Un procédé de frittage pour améliorer la résistance à l'oxydation de matériau en carbure de silicium lié au nitrure **caractérisé par** :
l'introduction d'Oz pur ou de gaz mixte contenant de l'O₂ pur et du H₂O dans un four dans lequel se trouvent des matériaux en carbure de silicium lié au nitrure après nitruration et frittage des matériaux en carbure de silicium lié au nitrure, afin de réaliser une oxydation protectrice par le biais d'un processus à « oxygène humide-oxygène sec », en utilisant un débitmètre afin de contrôler le débit d'O₂ pur ou de gaz mixte et le rapport du gaz mixte, et, dans le même temps, en observant la différence de hauteur de la colonne d'eau dans le tube en forme de U afin de s'assurer que le four est sous pression positive, le procédé de frittage comprenant les étapes suivantes :
après nitruration et frittage des matériaux en carbure de silicium lié au nitrure, l'introduction de gaz mixte contenant de l'O₂ pur et du H₂O à une température de 1 100 °C_{∼}1 400 °C, et le maintien de la température pendant 1 à 15 heures afin de réaliser l'oxydation protectrice sous « oxygène humide », puis l'introduction d'Oz pur, et le maintien de la température pendant 1 à 10 heures afin de réaliser l'oxydation protectrice sous « oxygène sec », dans lequel l'O₂ pur est du gaz oxygène sec présentant une teneur en oxygène ≥ 99 %, le gaz mixte contient de 2-98 % en volume d'Oz pur et de 98-2 % en volume de H₂O (en gaz), la plage de pression de la pression positive est de 10-30 mm de colonne d'eau.

2. Le procédé de frittage pour améliorer la résistance à l'oxydation de matériaux en carbure de silicium lié au nitrure selon la revendication 1, dans lequel le matériau en carbure de silicium lié au nitrure inclut tous matériaux ayant comme phase de liaison des nitrures ou des oxynitrures ou des nitrures/oxynitrures, et présentant une teneur en carbure de silicium égale ou supérieure à 50 % (en poids).

3. Le procédé de frittage pour améliorer la résistance à l'oxydation de matériaux en carbure de silicium lié au nitrure selon la revendication 1, dans lequel la plage de pression de la pression positive est de 15-25 mm de colonne d'eau.

4. Le procédé de frittage pour améliorer la résistance à l'oxydation de matériaux en carbure de silicium lié au nitrure selon la revendication 1, dans lequel le gaz mixte contient de 5-95 % en volume d'O₂ pur (teneur en O₂ ≥ 99 %) et de 95-5 % en volume de H₂O (en gaz).
